# EUROPÄISCHE PATENTSCHRIFT

(11) **EP 3 083 479 B1**
(45) Veröffentlichungstag und Bekanntmachung des Hinweises auf die Patenterteilung: **07.03.2018**
(21) Anmeldenummer: 14821115.4
(22) Anmeldetag: 16.12.2014
(51) Int. Cl.: B66B 19/00, G01C 15/10

(54) **VERFAHREN ZUR INSTALLATION EINER AUFZUGSANLAGE UND EINE VORRICHTUNG**
METHOD FOR INSTALLING A LIFT SYSTEM AND A DEVICE
PROCÉDÉ D'INSTALLATION D'UNE INSTALLATION D'ASCENSEUR ET DISPOSITIF

(30) Priorität: 19.12.2013 EP 13198267
(43) Veröffentlichungstag der Anmeldung: 26.10.2016
(73) Patentinhaber: Inventio AG, 6052 Hergiswil (CH)
(72) Erfinder: PÜNTENER, Urs, Shanghai 200122 (CN); BUNTSCHU, Stefan, Port Macquarie, New South Wales 2444 (AU)
(86) Internationale Anmeldenummer: PCT/EP2014/077867
(87) Internationale Veröffentlichungsnummer: WO 2015/091419

(56) Entgegenhaltungen:
- JP-A- H0 632 556
- JP-A- H1 087 225
- JP-A- 2001 322 776

## Beschreibung

Die Erfindung betrifft ein Verfahren zur Installation einer Komponente einer Aufzugsanlage und eine Vorrichtung zur Ausrichtung dieser Komponente.

Bei der Installation der Komponenten einer Aufzugsanlage in einem Aufzugsschacht und insbesondere bei der Installation von Führungsschienen werden Vorrichtungen zur Ausrichtung einer solchen Komponente verwendet. Solche Vorrichtungen werden üblicherweise als Positionierungslehren bezeichnet. Ein Positionierungsrahmen dieser Vorrichtung wird im Schachtkopf des Aufzugsschachtes angeordnet und fixiert. Die Positionierungsrahmen weisen Markierungen auf, an denen Richtschnuren befestigt werden können. Die Richtschnuren sind entlang des Aufzugsschachtes gespannt. Die derart ausgerichteten Richtschnuren dienen der Orientierung bei der Installation der einzelnen Führungsschienen bzw. der einzelnen Komponenten. Die Ausrichtung des Positionierungsrahmens erfolgt üblicherweise bezüglich den einzelnen Schachttüröffnungen des Aufzugschachtes. Demgemäss können mit Hilfe dieser definiert angeordneten Richtschnuren Komponenten der Schachtüren installiert werden. Um eine ausreichende Exaktheit der Positionierung der Richtschnuren gewährleisten zu können, werden solche Richtschnuren mit einer Spannung versehen.

Die Richtschnuren können beispielhaft mittels Lotgewichten gespannt werden. Alternativ zur Spannung mittels der Lotgewichte kann ein zweiter Positionierungsrahmen in einer Schachtgrube des Aufzugsschachtes angeordnet und fixiert werden. An diesem zweiten Positionierungsrahmen werden die Richtschnuren ebenso fixiert, wie sie bereits an dem erstgenannten obengenannten Positionierungsrahmen fixiert wurden. Nachteilig ist, dass es durch am Positionierungsrahmen fixierte Richtschnuren erforderlich ist, dass der oder die Positionierungsrahmen eine erhöhte Stabilität aufweist bzw. aufweisen. Demnach muss der bzw. müssen die Positionsrahmen genügend stark ausbildet sein, um nicht aufgrund der Krafteinwirkung durch die Richtschnuren verformt zu werden. Folglich ist eine entsprechende Vorrichtung zur Ausrichtung einer solchen Komponente relativ teuer.

JP 2001 322776 A zeigt ein solches Verfahren zur Installation einer Komponente, wobei Richtschnuren an Positionierungsrahmen befestigt sind.

Andererseits ist es üblich, dass die Aufzugsanlagen entlang des Aufzugsschachtes abschnittsweise installiert werden. Das heisst beispielhaft, dass die Führungsschiene in einem unteren Bereichs des Aufzugsschachtes schon installiert sind, und darüber hinaus in diesem unteren Bereich der Aufzugsanlage bereits andere von der Vorrichtung zur Ausrichtung der Komponente unabhängige Installationsarbeiten ausgeführt werden. Folglich sind die Richtschnuren in diesem unteren Bereich des Aufzugsschachtes entfernt. Demnach ist die Vorrichtung zur Installation der oben im Aufzugsschacht angeordneten Führungsschienen lediglich in diesem oberen Bereich des Aufzugsschachtes angeordnet. Die beispielhaft von oben im Aufzugsschacht hängenden Lotgewichte stellen demnach eine Gefahr für in der Schachtgrube befindliche Personen dar.

Daher ist es Aufgabe der Erfindung, eine vereinfachte Vorrichtung zur Ausrichtung einer Aufzugsanlagenkomponente anzugeben, mittels derer die Sicherheit von im Aufzugsschacht befindlichen Personen gewährleistet werden kann.

Die Aufgabe wird gelöst durch ein Verfahren zur Installation einer Komponente einer einen Aufzugsschacht umfassenden Aufzugsanlage, das Verfahren umfassend die folgenden Verfahrensschritte:
- Ausrichten und Fixieren eines Positionierungsrahmens im Aufzugsschacht bezüglich einer den Aufzugsschacht begrenzenden Wand des Aufzugsschachtes,
- Fixieren einer Richtschnur im Aufzugsschacht, wobei die Richtschnur separat von dem Positionierungsrahmen im Aufzugsschacht fixiert wird,
- Ausrichten der Richtschnur mittels des ausgerichteten und fixierten Positionierungsrahmens, und
- Ausrichten der Komponente mittels der ausgerichteten Richtschnur.

Die Aufgabe wird ebenso gelöst durch eine Vorrichtung zur Ausrichtung einer Komponente einer Aufzugsanlage bei einer Installation dieser Komponente, die Vorrichtung umfassend einen Positionierungsrahmen, der im Aufzugsschacht der Aufzugsanlage bezüglich einer den Aufzugsschacht begrenzenden Wand des Aufzugsschachtes fixierbar ist, und eine Richtschnur, die separat von dem Positionierungsrahmen im Aufzugsschacht fixierbar ist, wobei der Positionierungsrahmen zur Ausrichtung der Richtschnur im Aufzugsschacht dient.

Die im Aufzugsschacht angeordnete Vorrichtung dient dem Ausrichten der Komponente der Aufzugsanlage während der Installation dieser Komponente. Zu diesem Zweck werden der Positionierungsrahmen und die mit Hilfe des Positionierungsrahmens ausgerichtete Richtschnur im Aufzugsschacht befestigt. Eine solche Richtschnur kann beispielhaft durch einen Draht oder ein Seil, hergestellt aus Metall oder Kunstfasern gebildet sein. Um den geradlinigen Verlauf der Richtschnur im Aufzugsschacht garantieren zu können, muss die Richtschnur entlang ihrer Länge gespannt sein. Um zudem ausreichende Stabilität des Positionierungsrahmens gewährleisten zu können, dennoch aber Material für den Positionierungsrahmen einsparen zu können, ist die Richtschnur nicht am Positionierungsrahmen selbst, sondern an einer anderen Stelle als der Positionierungsrahmen im Aufzugsschacht fixiert. Das heisst, dass ein erstes Ende der Richtschnur an einer Wand oder an der Decke oder am Boden des Aufzugsschachtes fixiert bzw. befestigt ist. Somit wird mittels des Positionierungsrahmens ausschliesslich die Ausrichtung der Richtschnur im Aufzugsschacht realisiert. Das heisst, dass der Abschnitt der Richtschnur zwischen einem Befestigungspunkt der Richtschnur im Aufzugsschacht und diesem Positionierungsrahmen, mittels dessen die Ausrichtung der Richtschnur vollzogen wird, nicht zur Ausrichtung der Komponente geeignet. Demnach ist dieser Abschnitt unausgerichtet, also nicht ausgerichtet. Damit wird die Belastung, die aus der für die Richtschnur notwendigen Spannung resultiert, direkt auf die Struktur des Aufzugsschachtes, nicht auf den Positionierungsrahmen übertragen.

Bei einer Weiterbildung des Verfahrens wird die Richtschnur mittels eines Befestigungsmittels im Aufzugsschacht fixiert. Ein solches Befestigungsmittel ermöglicht das Entfernen der Richtschnur ohne Zerstörung der Richtschnur, nachdem die betreffende Komponente installiert ist.

Das Befestigungsmittel kann derart ausgebildet sein, dass die Richtschnur mit der Spannkraft von mindestens 300 N beaufschlagbar ist. Eine Spannkraft der Richtschnur von mindestens 300 N ermöglicht, dass die Richtschnur in hohen Aufzugsschächten gespannt werden kann.

Das Befestigungsmittel kann einen Sockel und einen an dem Sockel schwenkbaren Arm umfassen, welcher Arm geschwenkt wird, um die Richtschnur bezüglich des Positionierungsrahmens auszurichten. Dieser Sockel ist im Aufzugsschacht befestigbar. Derart kann der Verlauf der Richtschnur am Positionierungsrahmen selbst beeinflusst und die Richtschnur demzufolge geschont werden.

Bei einer Weiterbildung des Verfahrens wird ein erstes Ende der Richtschnur an der Wand des Aufzugsschachtes fixiert. Der Positionierungsrahmen kann an irgendeiner Stelle des Aufzugsschachtes angeordnet werden. Mittels der Fixierung der Richtschnur an der Wand des Aufzugsschachtes ist somit ermöglicht, dass die Richtschnur in unmittelbarer Nähe des Positionierungsrahmens fixiert werden kann.

Üblicherweise weist der Aufzugsschacht mehrere Schachttüröffnungen auf. Der Positionierungsrahmen und die Richtschnur können demnach oberhalb einer untersten und unterhalb einer obersten der Schachttüröffnungen im Aufzugsschacht fixiert werden. Auf diese Weise kann die Aufzugsanlage abschnittsweise in Betrieb genommen werden. Das heisst beispielhaft, dass im unteren Bereich des Aufzugsschachtes die Aufzugsanlage bereits installiert und betriebsbereit ist. Somit wird ermöglicht, dass bei einer Installation der Aufzugsanlage im oberen Bereich die verwendete Vorrichtung zur Ausrichtung der Komponente in keinster Weise in den unteren Bereich der Aufzugsanlage eindringt. Zusätzlich kann der zur Ausrichtung der Komponente vorgesehene Abschnitt der Richtschnur oberhalb des Positionierungsrahmens angeordnet werden. Mittels einer derartigen Anordnung ist ermöglicht, dass die Richtschnur derart fixiert ist, dass Personen, die im Aufzugsschacht bei darin angeordneter Vorrichtung arbeiten, nicht verletzungsgefährdet sind.

Statt der genannten Fixierung des ersten Endes der Richtschnur an der Wand des Aufzugsschachtes kann das erste Ende der Richtschnur an einer Schachtdecke des Aufzugsschachts oder am Schachtboden des Aufzugschachtes fixiert werden. Derart kann die Installation der Komponente vom Schachtboden aus bzw. zur Schachtdecke hin ausgeführt werden.

Bei einer Weiterbildung des Verfahrens wird die Richtschnur zur Ausrichtung der Führungsschiene verwendet wobei die Führungsschiene zur Führung der Aufzugskabine der Aufzugsanlage oder zur Führung des Gegengewichtes der Aufzugsanlage vorgesehen ist.

Im Folgenden wird die Erfindung anhand von Figuren näher erläutert. Es zeigen:
- Figur 1:: eine in einem Aufzugsschacht angeordnete Vorrichtung zur Ausrichtung einer Komponente einer Aufzugsanlage;
- Figur 2:: einen Ausschnitt einer oberhalb einer untersten Schachttüröffnung angeordneten Vorrichtung;
- Figur 3:: ein Befestigungsmittel der in Figur 2 gezeigten Vorrichtung.

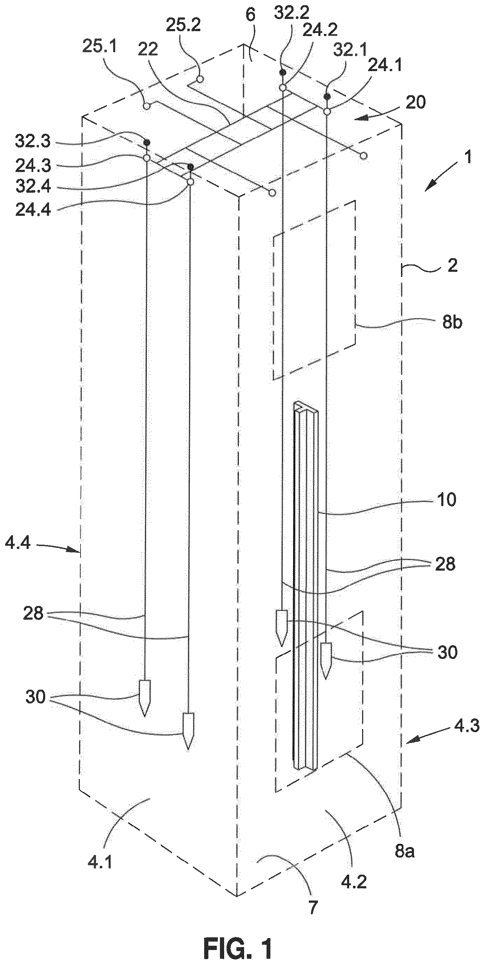

Figur 1 zeigt einen Aufzugsschacht 2 einer Aufzugsanlage 1 während einer Installationsphase der Aufzugsanlage 1, wobei der Aufzugsschacht 2 gestrichelt dargestellt ist. Der Aufzugsschacht 2 weist mindestens eine Wand 4.1, 4.2, 4.3, 4.4 und einen Schachtboden 7 auf. Der Aufzugsschacht 2 ist von dem Schachtboden 7 und der mindestens einen Wand 4.1, 4.2, 4.3, 4.4 begrenzt. Zusätzlich kann der der Aufzugsschacht 2 von einer Schachdecke 6 begrenzt sein. Der Aufzugsschacht 2 weist mehrere Schachttüröffnungen auf. Ausschliesslich dargestellt sind eine unterste der Schachttüröffnungen 8a und eine oberste der Schachttüröffnungen 8b entsprechend ihrer Anordnung im Aufzugsschacht 2.

In diesem Aufzugsschacht 2 ist eine Vorrichtung 20 zur Ausrichtung einer Komponente 10 der Aufzugsanlage 1 angeordnet. Die Vorrichtung 20 umfasst einen Positionierungsrahmen 22 und mindestens eine Richtschnur 28. Die Richtschnur 28 dient der üblicherweise lotgerechten Ausrichtung der Komponente 10 der Aufzugsanlage 1, beispielhaft einer Führungsschiene. Der Positionierungsrahmen 22 ist bezüglich der die Schachtüröffnungen 8 aufweisenden Wand 4.2 fixiert. Der Positionierungsrahmen 22 weist beispielhaft Positionierhilfen 24.1, 24.2, 24.3, 24.4, 25.1, 25. 2 auf. Ein erstes Paar 24.1, 24.2 und ein zweites Paar 24.3, 24.4 der gezeigten Positionierhilfen 24.1, 24.2, 24.3, 24.4, 25.1, 25.2 ist zur Ausrichtung von Führungsschienen zur Führung einer Aufzugskabine der Aufzugsanlage 1 vorgesehen. Ein drittes Paar 25.1, 25.2 der gezeigten Positionierhilfen 24.1, 24.2, 24.3, 24.4, 25.1, 25.2 ist zur Ausrichtung von Führungsschienen zur Führung eines Gegengewichtes der Aufzugsanlage 1 vorgesehen. Die mindestens eine Richtschnur 28 ist an der Schachtdecke 6 mittels Befestigungsmitteln 24.1, 24.2, 24.3, 24.4 fixiert. Jede dieser Richtschnuren 28 ist mittels der Positionierhilfen 24.1, 24.2, 24.3, 24.4, 25.1, 25.2 im Aufzugsschacht 2 ausgerichtet. Im gezeigten Beispiel sind die Positionierhilfen 24.1, 24.2, 24.3, 24.4, 25.1, 25.2 durch im Positionierungsrahmen 22 ausgebildete Bohrungen gebildet, wobei eine einzelne dieser mindestens einen Richtschnur 28 einer einzelnen dieser Bohrungen zugeordnet und durch diese geführt ist. Die Richtschnuren 28 weisen jeweils ein Lotgewicht 30 auf. Dieses Lotgewicht 30 ermöglicht die senkrechte Ausrichtung der Richtschnur 28 im Aufzugsschacht 2.

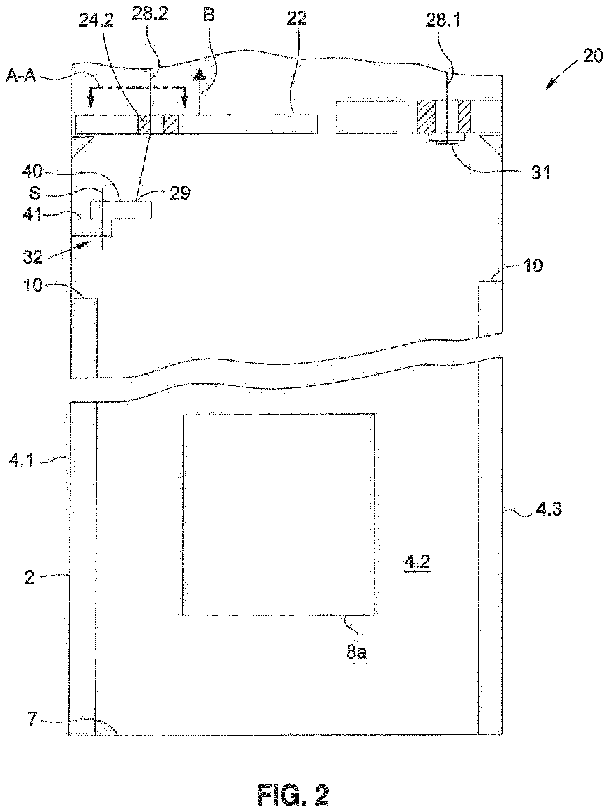

Figur 2 zeigt zwei Bereiche eines Aufzugsschachtes 2. Der dargestellte untere Bereich zeigt eine oberhalb eines Schachtbodens 7 angeordnete Schachtgrube des Aufzugsschachtes 2. Der Aufzugsschacht 2 ist zudem durch Wände 4.1, 4.2, 4.3 entlang des Aufzugsschachtes 2 begrenzt. Oberhalb des Schachtbodens 7 ist eine unterste Schachttüröffnung 8a in einer ersten der Wände 4.2 angeordnet.

Im unteren Bereich der Aufzugsanlage sind die Komponenten 10, die einer Ausrichtung mittels einer Vorrichtung 20 zur Ausrichtung dieser Komponenten 10 der Aufzugsanlage bedürfen, bereits installiert. Die einen Positionierungsrahmen 22 und mindestens eine Richtschnur 28 umfassende Vorrichtung 20 ist oberhalb dieser bereits installierten Komponenten 10 im dargestellten oberen Bereich teilweise gezeigt. Eine alternative nicht dargestellte Variante besteht darin, die Vorrichtung 20 in unmittelbarer Umgebung des Schachtbodens 7 anzuordnen, um die gesamte Führungsschiene 10 mittels der Richtschnur 28 auszurichten.

Der Positionierungsrahmen 22 ist im Aufzugsschacht 2 befestigt. Der Positionierungsrahmen 22 ist bezüglich der die Schachttüröffnung 8a aufweisenden Wand 4.2 des Aufzugsschachtes 2 fixiert. Das bedeutet gleichermassen, dass der Positionierungsrahmen 22 bezüglich der links dargestellten Wand 4.1 als auch der rechts dargestellten Wand 4.3 des Aufzugsschachtes 2 fixiert ist.

Das in Figur 2 rechtsseitig dargestellte Detail der den Positionierungsrahmen 22 umfassenden Vorrichtung 20 ist gemäss bekanntem Stand der Technik ausgeführt. Demnach ist eine erste Richtschnur 28.1 der Vorrichtung 20 mittels einer Befestigung 31 am Positionierungsrahmen 22 selbst fixiert. Aufgrund der Fixierung der ersten Richtschnur 28.1 direkt am Positionierungsrahmen 22 ist eine erhöhte Belastungsfähigkeit des Positionierungsrahmens 22 vonnöten. Entsprechend ist der Positionierungsrahmen 22 am Befestigungsmittel 31 stärker ausgebildet, was in Figur 2 durch eine im Vergleich zum linksseitig dargestellten Positionierungsrahmen 22 erhöhte Stärke des rechtsseitig dargestellten Positionierungsrahmens 22 kenntlich gemacht ist.

Das in Figur 2 linksseitig dargestellte Detail der den Positionierungsrahmen 22 umfassenden Vorrichtung 20 ist gemäss einer Ausführungsform der vorliegenden Erfindung ausgeführt. Eine zweite der Richtschnuren 28.2 ist an der Wand 4.1 mittels eines Befestigungsmittels 32 fixiert. Das Befestigungsmittel 32 umfasst einen direkt an der Wand 4.1 befestigten Sockel 41 und einen an dem Sockel 41 schwenkbaren Arm 40. Der schwenkbare Arm 40 ist an dem Sockel 41 derart schwenkbar gelagert, dass die am schwenkbaren Arm 40 befestigte zweite Richtschnur 28.2 bezüglich des Positionierungsrahmens 22 ausgerichtet werden kann. Das heisst, dass die zweite Richtschnur 28.2 in der unmittelbaren Umgebung der Positionierungshilfe 24.2 des Positionierungsrahmens 22 nur geringfügig umgelenkt ist. Die zweite Richtschnur 28.2 ist im Punkt 29 am schwenkbaren Arm 40 befestigt.

Der zur Ausrichtung der Komponente 10 vorgesehene Abschnitt B der zweiten Richtschnur 28.2 ist oberhalb des Positionierungsrahmens 22 angeordnet. Demgemäss kann sowohl die erste als auch die zweite Richtschnur 28.1, 28.2 oberhalb des Positionierungsrahmens 22 mittels eines weiteren nicht dargestellten Positionierungsrahmens der Vorrichtung 20 ausgerichtet sein.

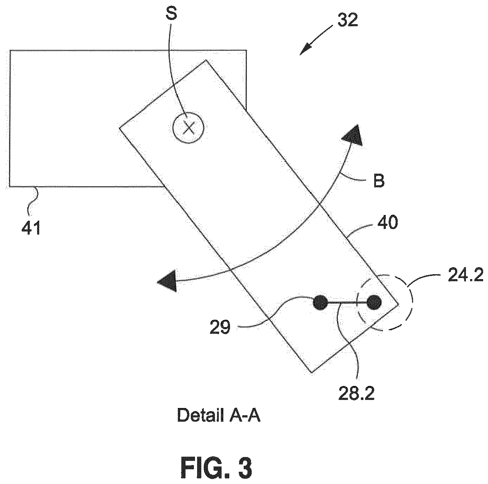

Figur 3 zeigt das in Figur 2 dargestellte Befestigungsmittel 32 der zweiten Richtschnur 28.2 aus einer Ansicht von oben in Richtung der Schachtgrube des Aufzugsschachtes. Der Arm 40 ist um die Achse S mittels der Schwenkbewegung B schwenkbar. Die Richtschnur 28.2 ist vom Punkt 29 zum Positionierungshilfsmittel 24.2 beispielhaft nicht vertikal geführt. Vom Positionierungshilfsmittel 24.2 verläuft die Richtschnur 28.2 entlang des in Figur 2 dargestellten Abschnittes B im Wesentlichen senkrecht nach oben.

## Patentansprüche

1. Verfahren zur Installation einer Komponente (10) einer einen Aufzugsschacht (2) umfassenden Aufzugsanlage (1), das Verfahren umfassend die folgenden Verfahrensschritte:
- Ausrichten und Fixieren eines Positionierungsrahmens (22) im Aufzugsschacht (2) bezüglich einer den Aufzugsschacht (2) begrenzenden Wand (4.1, 4.2, 4.3, 4.4, 6, 7) des Aufzugsschachtes (2),
- Fixieren einer Richtschnur (28) im Aufzugsschacht (2), wobei die Richtschnur (28) separat von dem Positionierungsrahmen (22) im Aufzugsschacht (2) fixiert wird,
- Ausrichten der Richtschnur (28) mittels des ausgerichteten und fixierten Positionierungsrahmens (22),
- Ausrichten der Komponente (10) mittels der ausgerichteten Richtschnur (28), wobei die Richtschnur (28) mittels eines Befestigungsmittels (32, 32.1, 32.2, 32.3, 32.4) im Aufzugsschacht (2) fixiert wird, **dadurch gekennzeichnet, dass** ein Abschnitt der Richtschnur (28) zwischen dem Befestigungsmittel (32, 32.1, 32.2, 32.3, 32.4) und dem ausgerichteten und fixierten Positionierungsrahmen (22) unausgerichtet ist.

2. Verfahren nach Anspruch 1, wobei das Befestigungsmittel (32, 32.1, 32.2, 32.3, 32.4) derart ausgebildet ist, dass die Richtschnur (28) mit einer Spannkraft von mindestens 300 N beaufschlagbar ist.

3. Verfahren nach einem der vorangegangenen Ansprüche, wobei das Befestigungsmittel (32) einen Sockel (41) und einen an dem Sockel (41) schwenkbaren Arm (40) umfasst, welcher Arm (40) geschwenkt wird, um die Richtschnur (28) bezüglich eines Positionierungsmittels 24.2 des Positionierungsrahmens (22) auszurichten.

4. Verfahren nach einem der vorangegangenen Ansprüche, wobei ein erstes Ende der Richtschnur (28) an der Wand (4.1, 4.2, 4.3, 4.4) des Aufzugsschachtes (2) fixiert wird.

5. Verfahren nach einem der vorangegangenen Ansprüche, wobei der Aufzugsschacht (2) mehrere Schachttüröffnungen (8) aufweist und wobei der Positionierungsrahmen (22) und die Richtschnur (28) oberhalb einer untersten und unterhalb einer obersten der Schachttüröffnungen (8) im Aufzugsschacht (2) fixiert werden.

6. Verfahren nach Anspruch 5, wobei der zur Ausrichtung der Komponente (10) vorgesehene Abschnitt (B) der Richtschnur (28) oberhalb des Positionierungsrahmens (22) angeordnet wird.

7. Verfahren nach einem der Ansprüche 1 bis 3, wobei ein erstes Ende der Richtschnur (28) an einer Schachtdecke (6) des Aufzugsschachtes (2) oder am Schachtboden (7) des Aufzugsschachtes (2) fixiert wird.

8. Verfahren nach einem der vorangegangenen Ansprüche, wobei die Richtschnur (28) zur Ausrichtung einer Führungsschiene (10) verwendet wird und die Führungsschiene (10) zur Führung einer Aufzugskabine der Aufzugsanlage (1) oder zur Führung eines Gegengewichtes der Aufzugsanlage (1) vorgesehen ist.

9. Vorrichtung (20) zur Ausrichtung einer Komponente (10) einer Aufzugsanlage (1) bei einer Installation dieser Komponente (10), umfassend:
einen Positionierungsrahmen (22), der im Aufzugsschacht (2) der Aufzugsanlage (1) bezüglich einer den Aufzugsschacht (2) begrenzenden Wand (4.1, 4.2, 4.3, 4.4, 6, 7) des Aufzugsschachtes (2) fixierbar ist, und
eine Richtschnur (28), die separat von dem Positionierungsrahmen (22) im Aufzugsschacht (2) fixierbar ist, wobei der Positionierungsrahmen (22) zur Ausrichtung der Richtschnur (28) im Aufzugsschacht (2) dient, wobei die Richtschnur (28) mittels eines Befestigungsmittels (32, 32.1, 32.2, 32.3, 32.4) im Aufzugsschacht (2) fixiert ist, **dadurch gekennzeichnet, dass** ein Abschnitt der Richtschnur (28) zwischen dem Befestigungsmittel (32, 32.1, 32.2, 32.3, 32.4) und dem ausgerichteten und fixierten Positionierungsrahmen (22) unausgerichtet ist.

## Claims

1. A method of installing a component (10) of an elevator installation (1) comprising an elevator shaft (2), the method comprising the following method steps:
- aligning and fixing a positioning frame (22) in the elevator shaft (2) with respect to a wall (4.1, 4.2, 4.3, 4.4, 6, 7) of the elevator shaft (2), which wall bounds the elevator shaft (2),
- fixing a guide line (28) in the elevator shaft (2), wherein the guide line (28) is fixed in the elevator shaft (2) separately from the positioning frame (22),
- aligning the guide line (28) by means of the aligned and fixed positioning frame (22) and
- aligning the component (10) by means of the aligned guide line (28), wherein the guide line (28) is fixed in the elevator shaft (2) by way of fastening means (32, 32.1, 32.2, 32.3, 32.4), **characterized in that** a section of the guide line (28) between the fastening means (32, 32.1, 32.2, 32.3, 32.4) and the aligned and fixed positioning frame (22) is unaligned.

2. The method according to claim 1, wherein the fastening means (32, 32.1, 32.2, 32.3, 32.4) is so constructed that the guide line (28) can be loaded with a tensioning force of at least 300 N.

3. The method according to one of the preceding claims, wherein the fastening means (32) comprises a base (41) and an arm (40) pivotable at the base (41), which arm (40) is pivoted so as to align the guide line (28) with respect to a positioning means (24.2) of the positioning frame (22).

4. The method according to one of the preceding claims, wherein a first end of the guide line (28) is fixed to the wall (4.1, 4.2, 4.2, 4.4) of the elevator shaft (2).

5. The method according to one of the preceding claims, wherein the elevator shaft (2) has a plurality of shaft door openings (8) and wherein the positioning frame (22) and the guide line (28) are fixed above a lowermost and below an uppermost one of the shaft door openings (8) in the elevator shaft (2).

6. The method according to claim 5, wherein the section (B) of the guide line (28) intended for alignment of the components (10) is arranged above the positioning frame (22).

7. The method according to one of claims 1 to 3, wherein a first end of the guide line (28) is fixed to a shaft ceiling (6) of the elevator shaft (2) or to the shaft floor (7) of the elevator shaft (2).

8. The method according to one of the preceding claims, wherein the guide line (28) is used for aligning a guide rail (10) and the guide rail (10) is provided for guidance of an elevator cage of the elevator installation (1) or for guidance of a counterweight of the elevator installation (1).

9. A device (20) for aligning a component (10) of an elevator installation (1) when installing this component (10), comprising:
a positioning frame (22), which is fixable in the elevator shaft (2) of the elevator installation (1) with respect to a wall (4.1, 4.2, 4.3, 4.4, 6, 7) of the elevator shaft (2), which wall bounds the elevator shaft (2), and
a guide line (28) which is fixable in the elevator shaft (2) separately from the positioning frame (22), wherein the positioning frame (22) serves for alignment of the guide line (28) in the elevator shaft (2), wherein the guide line (28) is fixed in the elevator shaft (2) by way of fastening means (32, 32.1, 32.2, 32.3, 32.4), **characterized in that** a section of the guide line (28) between the fastening means (32, 32.1, 32.2, 32.3, 32.4) and the aligned and fixed positioning frame (22) is unaligned.

## Revendications

1. Procédé d'installation d'un composant (10) d'un système d'ascenseur (1) comprenant une cage d'ascenseur (2), le procédé comprenant les étapes de procédé suivantes :
- l'orientation et la fixation d'un cadre de positionnement (22) dans la cage d'ascenseur (2) par rapport à une paroi (4.1, 4.2, 4.3, 4.4, 6, 7) de la cage d'ascenseur (2) délimitant la cage d'ascenseur (2),
- la fixation d'un cordeau traceur (28) dans la cage d'ascenseur (2), le cordeau traceur (28) étant fixé dans la cage d'ascenseur (2) séparément du cadre de positionnement (22),
- l'orientation du cordeau traceur (28) au moyen du cadre de positionnement (22) orienté et fixé,
- l'orientation du composant (10) au moyen du cordeau traceur (28) orienté, le cordeau traceur (28) étant fixé à l'aide d'un moyen de fixation (32, 32.1, 32.2, 32.3, 32.4) dans la cage d'ascenseur (2), **caractérisé en ce qu'**une partie du cordeau traceur (28) entre le moyen de fixation (32, 32.1, 32.2, 32.3, 32.4) et le cadre de positionnement (22) orienté et fixé n'est pas orientée.

2. Procédé selon la revendication 1, le moyen de fixation (32, 32.1, 32.2, 32.3, 32.4) étant conçu de telle sorte que le cordeau traceur (28) peut être soumis à une force de serrage d'au moins 300 N.

3. Procédé selon une des revendications précédentes, le moyen de fixation (32) comprenant une embase (41) et un bras (40) pouvant pivoter sur l'embase (41), le pivotement dudit bras (40) étant effectué afin d'orienter le cordeau traceur (28) par rapport à un moyen de positionnement 24.2 du cadre de positionnement (22).

4. Procédé selon l'une des revendications précédentes, une première extrémité du cordeau traceur (28) étant fixée à la paroi (4.1, 4.2, 4.3, 4.4) de la cage d'ascenseur (2).

5. Procédé selon l'une des revendications précédentes, la cage d'ascenseur (2) possédant plusieurs ouvertures de porte de cage (8) et le cadre de positionnement (22) et le cordeau traceur (28) étant fixés dans la cage d'ascenseur (2) au-dessus d'une des ouvertures de porte de cage (8) qui est la plus basse et au-dessous d'une des ouvertures de porte de cage (8) qui est la plus haute.

6. Procédé selon la revendication 5, la partie (B) du cordeau traceur (28) prévue pour orienter le composant (10) étant disposée au-dessus du cadre de positionnement (22).

7. Procédé selon l'une des revendications 1 à 3, une première extrémité du cordeau traceur (28) étant fixée à un plafond de cage (6) de la cage d'ascenseur (2) ou au sol de cage (7) de la cage d'ascenseur (2).

8. Procédé selon l'une des revendications précédentes, le cordeau traceur (28) étant utilisé pour orienter un rail de guidage (10) et le rail de guidage (10) étant prévu pour guider une cabine d'ascenseur du système d'ascenseur (1) ou pour guider un contrepoids du système d'ascenseur (1).

9. Dispositif (20) d'orientation d'un composant (10) d'un système d'ascenseur (1) lors de l'installation de ce composant (10), comprenant :
un cadre de positionnement (22) qui peut être fixé dans la cage d'ascenseur (2) du système d'ascenseur (1) par rapport à une paroi (4.1, 4.2, 4.3, 4.4, 6, 7) de la cage d'ascenseur (2) limitant la cage d'ascenseur (2), et
un cordeau traceur (28) qui peut être fixé dans la cage d'ascenseur (2) séparément du cadre de positionnement (22), le cadre de positionnement (22) servant à orienter le cordeau traceur (28) dans la cage d'ascenseur (2), le cordeau traceur (28) étant fixé dans la cage d'ascenseur (2) à l'aide d'un moyen de fixation (32, 32.1, 32.2, 32.3, 32.4), **caractérisé en ce qu'**une partie du cordeau traceur (28) entre le moyen de fixation (32, 32.1, 32.2, 32.3, 32.4) et le cadre de positionnement (22) orienté et fixé n'est pas orientée.
